# EUROPEAN PATENT SPECIFICATION

(11) **EP 3 445 128 B1**
(45) Date of publication and mention of the grant of the patent: **23.02.2022**
(21) Application number: 16901248.1
(22) Date of filing: 10.05.2016
(51) Int. Cl.: H04W 76/15, H04W 76/25, H04W 76/27, H04W 76/16

(54) **METHOD AND DEVICE FOR DATA TRANSMISSION**
VERFAHREN UND VORRICHTUNG ZUR DATENÜBERTRAGUNG
PROCÉDÉ ET DISPOSITIF D'ÉMISSION DE DONNÉES

(43) Date of publication of application: 20.02.2019
(73) Proprietor: Huawei Technologies Co., Ltd., Longgang Shenzhen, Guangdong 518129 (CN)
(72) Inventor: JIN, Hui, Shenzhen, Guangdong 518129 (CN); TENNY, Nathan Edward, Shenzhen, Guangdong 518129 (CN); DUAN, Xiaoyan, Shenzhen, Guangdong 518129 (CN); OUYANG, Guowei, Shenzhen, Guangdong 518129 (CN)
(74) Representative: Isarpatent
(86) International application number: PCT/CN2016/081598
(87) International publication number: WO 2017/193293

(56) References cited:
- WO-A1-2014/137184
- WO-A1-2014/168426
- WO-A1-2015/064972
- CN-A- 102 761 904
- CN-A- 104 823 507
- US-A1- 2014 079 022
- US-A1- 2014 241 317

## Description

### TECHNICAL FIELD

The present invention relates to the communications field, and more specifically, to a data transmission method and a communication system.

### BACKGROUND

There are various types of user equipments (User Equipment, "UE" for short) and various types of access nodes in a next-generation mobile communications system (for example, 5^{th} generation wireless communications system (the 5^{th} Generation of Wireless Communication System, "5G" for short). Different user equipments or same user equipment may have different data transmission requirements in different scenarios. For example, smartphones may require a voice or video call service and a data service in an entertainment environment, that is, have data transmission requirements for a high rate and a relatively low latency. In-vehicle devices or smartphones may require a navigation service and an automated-driving control service in an in-vehicle environment, that is, have data transmission requirements for relatively high reliability and a low latency.

Therefore, how to use different radio access technologies (Radio Access Technology, "RAT" for short) RATs based on data transmission requirements of UE to satisfy different data transmission requirements of the UE is an important problem to be resolved in a future mobile communications system.

In the prior art the following documents relate to the technological background of the present invention. A wireless transmit receive unit (WTRU) disclosed in US2014/079022 A1 is intended to provide Wi-Fi offloading and it supports multi-radio access technology (RAT) CA using a 3GPP (e.g., HSPA or LTE) RAT and Wi-Fi RAT. The WTRU is connected with a 3GPP network 404 via an RRC connection, and is intended to establish communication with the Wi-Fi AP for WiFi offloading when the WTRU moves into the coverage area of a Wi-Fi AP 406.

Similarly to this, the system of US2014/241317 A1 is also intended for achieving better load balance and Wi-Fi off-loading. Further, this system enables the UE for simultaneous transmission and reception across multiple evolved NodeBs (eNBs) from a User Equipment (UE) in a Long Term Evolution (LTE) network.

Another method disclosed in WO2014/137 184 is aimed to establish a session for a user plane (U-plane) switch in a converged communication system of a cellular system and a Wi-Fi system. The U-Plane switch is implemented to ensure that the data flow is transmitted through the most appropriate RAT system among a plurality of RAT systems. A local mobility anchor (LMA) or P-GW is a device that controls data flows transmitted/received through a secondary RAT system and through a primary RAT system. Thus, the PGW ensures, in a scenario of a U-plane switch, the establishment of a session to support seamless connectivity for all data flows of a corresponding device.

### SUMMARY

The object of the present invention is to provide an efficient data transmission method and a device which can use different radio access technologies (Radio Access Technology, "RAT" for short) RATs based on data transmission requirements of UE to satisfy different data transmission requirements of the UE. This object is solved by the subject matter independent claims and further advantageous embodiments and improvements are listed in the dependent claims. A non-access stratum message between user equipment and a core network device is transmitted by using only one base station, and the user equipment accesses, based on information that is sent by the core network device by using the base station and that is related to another base station, the another base station to perform data transmission. In this way, the user equipment can access different base stations to satisfy different data transmission requirements. Furthermore, hereinafter some aspects are described which contribute to the understanding of the invention before coming to a detailed description of the embodiments of the invention with reference to the attached drawings.

For ease of understanding of this application, several elements to be introduced into descriptions of this application are first described herein.

A data transmission requirement is a requirement, such as a low-latency requirement, a high-rate requirement, and a high-reliability requirement, on transmission when user equipment (User Equipment, "UE" for short) transmits data of a service. For example, a transmission latency threshold may be preset to 10 ms. If a data transmission latency required by the UE is less than 10 ms, it is considered that the requirement of the UE on transmission is a low-latency requirement.

A non-access stratum ((Non-Access Stratum), "NAS" for short) message refers to signaling transmitted between the UE and a core network device.

Data transmission refers to a process of sending or receiving Internet Protocol (Internet Protocol, "IP" for short) data.

Therefore, in the data transmission method in the embodiment of the present invention, the NAS message between the user equipment and the core network device is transmitted by using only one base station, and the user equipment accesses, based on information that is sent by the core network device by using the base station and that is related to another base station, the another base station to perform data transmission. In this way, the user equipment can access different base stations to satisfy different data transmission requirements.

In addition, further, the NAS message between the UE and the core network device is transmitted only by using the first base station, that is, the UE performs only data transmission instead of signaling transmission by using the second base station. In this way, when the first base station and the second base station belong to different radio access technologies (Radio Access Technology, "RAT" for short), the UE can be prevented from performing NAS communication with different core network devices, so that signaling between the UE and a network can be reduced, thereby facilitating network management.

In the following, each of the described methods, apparatuses, systems, examples and aspects which does not fully correspond to the invention as defined in the claims is thus not according to the invention and is, as well as the whole following description, present for illustration purposes only or to highlight specific aspects or features of the claims.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may derive other drawings from these accompanying drawings without creative efforts.
FIG. 1 is a schematic diagram of an application scenario according to an embodiment of the present invention;
FIG. 2 is a schematic flowchart of a data transmission method according to an embodiment of the present invention;
FIG. 3 is another schematic flowchart of a data transmission method according to an embodiment of the present invention;
FIG. 4 is still another schematic flowchart of a data transmission method according to an embodiment of the present invention;
FIG. 5 is a schematic flowchart of a method for triggering UE to enter a connected state when the UE is called in a data transmission method not covered by the claims;
FIG. 6 is a schematic flowchart of a method for triggering UE to enter a connected state when the UE makes a call in a data transmission method not covered by the claims;
FIG. 7 is a schematic block diagram of user equipment according to an embodiment of the present invention;
FIG. 8 is another schematic block diagram of user equipment according to an embodiment of the present invention;
FIG. 9 is still another schematic block diagram of user equipment according to an embodiment of the present invention;
FIG. 10 is a schematic block diagram of a core network device according to an embodiment of the present invention;
FIG. 11 is a schematic block diagram of user equipment according to another embodiment of the present invention; and
FIG. 12 is a schematic block diagram of a core network device according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

The technical solutions in the embodiments of the present invention may be applied to various communications systems such as a Global system for mobile communications (Global system for mobile communications, "GSM" for short) system, a Code Division Multiple Access (Code Division Multiple Access, "CDMA" for short) system, a Wideband Code Division Multiple Access (Wideband Code Division Multiple Access, "WCDMA" for short) system, a Long Term Evolution (Long Term Evolution, "LTE" for short) system, an LTE frequency division duplex (Frequency Division Duplex, "FDD" for short) system, an LTE time division duplex (Time Division Duplex, "TDD" for short) system, a Universal Mobile Telecommunications System (Universal Mobile Telecommunications System, "UMTS" for short) system, and a future 5G communications system.

In the embodiments of the present invention, user equipment (User Equipment, "UE" for short) may also be referred to as a terminal device, a mobile station (Mobile Station, "MS" for short), a mobile terminal (Mobile Terminal), and the like. The user equipment may communicate with one or more core networks by using a radio access network (Radio Access Network, "RAN" for short). For example, the user equipment may be a mobile phone (or referred to as a "cellular" phone) or a computer having a mobile terminal. For example, the user equipment may be a portable, a pocket-sized, a handheld, a computer built-in or an in-vehicle mobile apparatus, a terminal device in a future 5G network, or a terminal device in a future evolved PLMN network.

In the embodiments of the present invention, a base station may be a base transceiver station (Base Transceiver Station, "BTS" for short) in the GSM system or CDMA, a NodeB (NodeB, "NB" for short) in the WCDMA system, an evolved NodeB (Evolved NodeB, "eNB" or "eNodeB" for short) in the LTE system, a base station in the future 5G network, or the like.

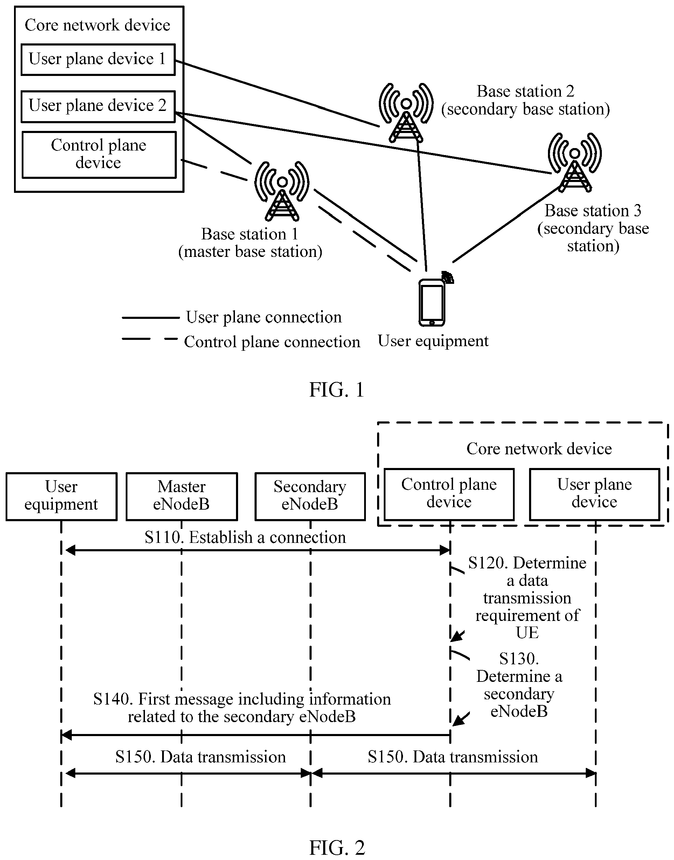

FIG. 1 is a diagram of an application scenario according to the present invention. As shown in FIG. 1, there are three base stations (a base station 1, a base station 2, and a base station 3) around user equipment UE. Each two of the three base stations support different data transmission requirements (where for example, the base station 1 may be a base station in 4G and supports a data transmission requirement for a high rate and a relatively low latency; the base station 2 is a base station having a relatively high frequency in 5G and supports a data transmission requirement on big data; the base station 3 is a base station having a relatively low frequency in 5G and supports a data transmission requirement on small data). The user equipment may access any one or more of the three base stations.

The base stations in FIG. 1 are controlled by a same core network device (or referred to as a core network entity). The core network device includes one control plane device and a plurality of user plane devices. Data of an upper-layer application is transmitted between the UE and the plurality of user plane devices by using a user plane, and control signaling is transmitted between the UE and the control plane device by using a control plane. Each two of the plurality of user plane devices support different data transmission requirements (where for example, a user plane device 1 supports a data transmission requirement for a high rate and a relatively low latency; a user plane device 2 supports a data transmission requirement for high reliability and a relatively low latency). The user equipment is attached to the control plane device by using the base station 1, and the control plane device records the base station 1 as a master base station of the user equipment. The control plane device records the base station 2 and the base station 3 as secondary base stations of the user equipment. The user equipment establishes a signaling connection to the control plane device by using the master base station, and performs non-access stratum (Non-access Stratum, "NAS" for short) communication with the control plane device by using the established signaling connection. The user equipment establishes a user plane connection to the user plane device by using the master base station and the secondary base station, and performs Internet Protocol (Internet Protocol, "IP" for short) data transmission with the user plane device by using the user plane connection. The three base stations and two user plane devices that are shown in FIG. 1 are merely an example, and do not limit a quantity of base stations and a quantity of user plane devices.

In the prior related art, a data transmission requirement of user equipment is relatively undiversified, and the UE accesses a base station in only one radio access technology (Radio Access Technology, "RAT" for short). In a future communications system, user equipment has different data transmission requirements. It is relatively difficult to satisfy all the requirements of the user equipment by using one RAT. Therefore, the UE needs to access different RATs. In the prior related art, different RATs have different core devices. When accessing different RATs, the UE needs to perform NAS communication with different core network devices, resulting in a relatively large amount of signaling between the UE and a network and not facilitating network management.

Based on the foregoing, a method for enabling user equipment to access different RATs and managing all the RATs by using one core network device may be provided, to reduce an amount of signaling between the UE and the network, and improve management efficiency of the network.

Methods in the embodiments of the present invention are described in detail below with reference to specific examples. FIG. 2 shows a data transmission method according to an embodiment of the present invention. As shown in FIG. 2, a method 100 includes the following steps.

S110: User equipment UE connects to a core network device by using a master eNodeB (Master NodeB, "M-NB" for short).

In this embodiment of the present invention, the core network device includes a control plane device (CP function) and a user plane device (User Plane Function, "UP Function" for short). The UE may select, based on signal strength and/or coverage, a NodeB used when performing non-access stratum (Non-access Stratum, "NAS" for short) communication with the core network device. For example, the UE may select a NodeB having largest coverage from NodeBs whose signal strength satisfies a requirement, to perform NAS communication with the CP function. The CP Function records, as the M-NB, the NodeB used when the UE performs NAS communication with the CP function.

S120: A control plane device determines a data transmission requirement of the user equipment UE.

In S110, after the UE connects to the core network device, the UE sends, to the CP function, a request for establishing a user plane. The request for establishing a user plane carries target quality of service (Quality of Service, "QoS" for short). Alternatively, another core network device such as an application device (Application Function) sends, to the CP function, a request for establishing a user plane connection. The request carries target QoS. The user plane connection may refer to a bearer (Bearer) or a data transmission path between the UE and the UP function.

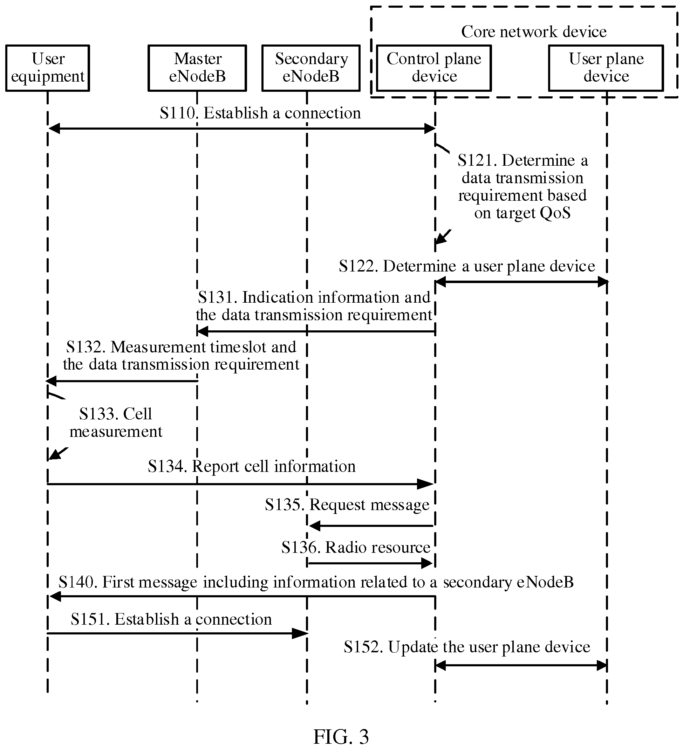

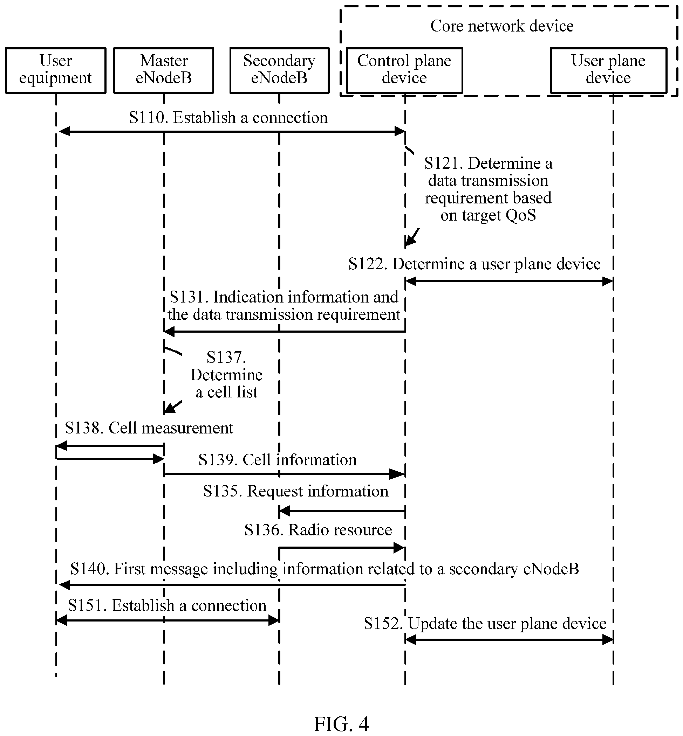

Correspondingly, as shown in FIG. 3 and FIG. 4, S120 includes S121 and S122.

S121: A CP function determines a data transmission requirement of the UE based on target QoS in a request.

The target QoS may be understood as a specific requirement on a QoS parameter during data transmission. The QoS parameter includes a priority, reliability, a throughput, a latency, and the like. For example, the target QoS requires that the latency during data transmission is less than 50 ms. The data transmission requirement may be understood as a requirement on transmission during data transmission, and for example, may be a low-latency requirement, a high-rate requirement, a high-reliability requirement, or a small-data requirement. If it is assumed that a latency being less than 200 ms during data transmission is a low-latency requirement, when the target QoS requires that the latency during data transmission is less than 50 ms, the CP function considers that a requirement of the UE on transmission during data transmission is a low-latency requirement.

Alternatively, the data transmission requirement may be understood as requiring data to be transmitted by using a 3G access network, a 4G access network, or a 5G access network. In the foregoing example, when the target QoS requires the latency during data transmission to be less than 50 ms, the CP function may consider that the UE requires to transmit data by using the 5G access network.

S122: The CP function selects, based on the target QoS in the request, a UP function supporting the target QoS, and establishes, with the selected UP function, a bearer (Bearer) satisfying the target QoS.

S130: The CP function determines a secondary eNodeB based on the data transmission requirement.

Specifically, as shown in FIG. 3, S130 includes the following steps.

S131: The CP function sends a message to the M-NB, where the message carries indication information for instructing the M-NB to allocate a measurement timeslot to the UE and the data transmission requirement.

The data transmission requirement may be carried in a NAS message. The M-NB does not obtain or cannot obtain information in the NAS message through parsing, and directly forwards the received NAS message to the UE. The data transmission requirement may alternatively be carried in a message between the CP function and the M-NB. The M-NB parses the received message and forwards the data transmission requirement in the message to the UE.

S132: The M-NB allocates the measurement timeslot to the UE, and sends, to the UE, the measurement timeslot and the data transmission requirement received in S131.

S133: The UE measures a cell based on the measurement timeslot allocated by the M-NB, where the measured cell is a cell satisfying the data transmission requirement.

A system information block (System Information Block, "SIB" for short) message received by the UE from an NB includes a data transmission requirement supported by each of cells of the NB. The UE learns, based on the SIB message, the data transmission requirement supported by each cell, and then compares the data transmission requirement sent by the M-NB and the data transmission requirement that is supported by each cell and that is learned from the SIB message, to determine a cell needing to be measured. During measurement, signal strength of each cell satisfying a condition may be selected for measuring.

S134: The UE reports information about a target cell to the CP function based on a measurement result.

The UE determines, from a plurality of cells to be measured and based on the measurement result of the signal strength of the cell to be measured that is determined in S133, the target cell that is to be reported to the CP function, and reports information about the determined target cell to the CP function.

For example, a signal strength threshold may be preset. Alternatively, the M-NB sends a signal strength threshold to the UE. The UE determines, as the target cell to be reported, a cell whose signal strength is greater than the signal strength threshold in the plurality of cells to be measured. In addition, the information about the target cell that is reported by the UE may include the signal strength of the target cell, load status information of the target cell, and the like.

Further, the information about the target cell may further include a cell identifier (a cell ID) of the target cell or a base station identifier (a base station ID) of an NodeB to which the target cell belongs. There may be one or more target cells herein. This is not limited in the present invention.

S135: The CP function determines an S-NB based on the information about the target cell that is reported by the UE, and sends a request message to the S-NB, to request the S-NB to allocate, to the UE, a radio resource for accessing the S-NB.

When the CP function determines the S-NB based on the information about the target cell, if the information about the target cell that is reported by the UE includes the cell identifier of the target cell, the CP function determines the S-NB based on the cell identifier of the target cell. Alternatively, if the information about the target cell that is reported by the UE includes the base station identifier of the NodeB to which the target cell belongs, the CP function determines the S-NB based on the base station identifier.

If there are two or more target cells, the CP function selects one target cell from the two or more target cells, and determines the S-NB based on information about the selected target cell.

Optionally, the CP function may select one target cell from the two or more target cells based on at least two of the following conditions: signal strength of each of the two or more target cells, a load status of a NodeB to which each of the two or more target cells belongs, and a connection status between a NodeB to which each of the two or more target cells belongs and the CP function. In this way, an operator can better control and schedule the UE. For example, the CP function may perform selection based on the signal strength of each of the two or more target cells and the load status of the NodeB to which each target cell belongs. In this case, a set of target cells belonging to NodeBs whose load is less than a load threshold may be first determined, then a target cell having highest signal strength is selected from the determined set of the target cells, and a NodeB to which the target cell belongs is determined as the S-NB. Alternatively, selection may be performed based on the signal strength of each of the two or more target cells and the connection relationship between the NodeB to which each target cell belongs and the CP function. In this case, a set of target cells belonging to NodeBs having an interface with the CP function may be first determined, then a target cell having highest signal strength is selected from the determined set of the target cells, and a NodeB to which the target cell belongs is determined as the S-NB.

Optionally, in S135, the request message sent by the CP function to the S-NB may further include the target QoS and indication information for instructing the S-NB to allocate the radio resource to the UE. After receiving the target QoS, the S-NB allocates, to the UE, the radio resource satisfying the target QoS.

S136: The CP function receives a message that is sent by the S-NB and that includes the radio resource.

After allocating the radio resource to the UE, the S-NB may send the radio resource to the CP function by using a container (Container).

Alternatively, as shown in FIG. 4, S130 includes the following steps.

S131: The CP function sends a message to the M-NB, where the message carries the data transmission requirement of the UE.

S137: The M-NB determines a cell list of a cell satisfying the data transmission requirement.

Data transmission requirements supported by cells of NBs surrounding the M-NB may be preconfigured on the M-NB. After receiving the data transmission requirement sent by the CP function, the M-NB may determine, in the cells of the surrounding NBs based on the preconfigured data transmission requirements supported by the cells of the surrounding NBs, a cell satisfying the received data transmission requirement. Alternatively, the M-NB may receive messages that are sent by surrounding NBs and that carry data transmission requirements supported by cells of the NBs, parse the received messages to obtain the data transmission requirements supported by the cells of the surrounding NBs, and after receiving the data transmission requirement sent by the CP function, determine, in the cells of the surrounding NBs based on the data transmission requirements that are supported by the cells of the surrounding NBs and that are obtained through parsing, a cell satisfying the received data transmission requirement.

S138: The M-NB sends measurement configuration information to the UE, where the measurement configuration information includes the cell list in S137, and receives a measurement result that is reported by the UE and that is obtained by measuring the cell in the cell list based on the measurement configuration information.

In addition to the cell list, the measurement configuration message sent by the M-NB to the UE may further include information such as a measurement timeslot allocated by the M-NB to the UE and a signal strength threshold. When the measurement configuration message includes the information, namely, the signal strength threshold, the UE reports, to the M-NB, a measurement result of only a cell whose signal strength is higher than the signal strength threshold.

S139: The M-NB determines a target cell based on the measurement result obtained through measurement, and reports information about the target cell to the CP function.

Optionally, the M-NB may report, to the CP function, received information about all the cells that is reported by the UE. Alternatively, the M-NB may select one or more cells from a plurality of cells reported by the UE, and report information about the one or more cells to the CP function. For example, the M-NB may report, to the CP function, information about three cells whose load is relatively light in the plurality of cells reported by the UE.

S135: The CP function determines an S-NB based on the information about the target cell that is reported by the UE, and sends a request message to the S-NB, to request the S-NB to allocate, to the UE, a radio resource for accessing the S-NB.

S136: The CP function receives a message that is sent by the S-NB and that includes the radio resource.

Specific implementations in S135 and S136 in FIG. 4 are the same as those in S135 and S136 in FIG. 3, and details are not described herein again.

S140: The UE receives a first message that is sent by the control plane entity and that includes information related to the secondary eNodeB.

The CP function sends, to the UE by using a NAS message, a received container that is sent by the S-NB in S136 and that includes the radio resource. The NAS message may further include an S-NB instruction, and the S-NB instruction is used to instruct the UE to access the S-NB.

S150: The UE performs, by using the secondary eNodeB based on the first message, data transmission satisfying the data transmission requirement.

Specifically, as shown in FIG. 3 and FIG. 4, S150 includes S151 and S152.

S151: The UE establishes a connection to the S-NB based on the radio resource in a container.

It may alternatively be understood as that the UE establishes a user plane connection to the S-NB.

In addition, the UE may store a correspondence between target QoS and an identifier of a user plane connection. When the UE subsequently needs to transmit data, a user plane connection to be used may be determined based on required QoS and the stored correspondence between the QoS and the identifier of the user plane connection.

S152: The CP function updates the UP function, to establish a connection between the S-NB and the UP function. Subsequently, the UE may perform data transmission by using the S-NB.

In this embodiment of the present invention, to reduce energy consumption, the UE may not need to be always connected to the M-NB and the S-NB. Specifically, the CP function may send, to the M-NB, a message carrying an inactive timer (Inactive Timer) for deactivating the M-NB, so that the M-NB does not release a signaling radio bearer SRB and a data radio bearer DRB between the M-NB and the UE. However, after the UE enters an idle (Idle) state in a service range of the S-NB, the CP function sends, to the M-NB, a message for activating the inactive timer, so that the M-NB releases the SRB and the DRB between the M-NB and the UE when the inactive timer expires, and the UE enters the idle state in a service range of the M-NB.

Alternatively, the CP function may send, to the M-NB, a message indicating not to release an SRB between the M-NB and the UE, so that the M-NB releases only a DRB between the M-NB and the UE and does not release the SRB between the M-NB and the UE when an inactive timer expires. After the UE enters an idle state in a service range of the S-NB, the CP function sends, to the M-NB, indication information indicating to release the SRB, so that the M-NB releases the SRB between the M-NB and the UE.

Alternatively, optionally, after learning that the UE enters an idle state in a service range of the M-NB, the CP function selects an S-NB, and sends, to the UE by using the S-NB, an update message carrying an identity change instruction, to change an identity of an S-NMB to the S-NB. Subsequently, the UE may perform NAS communication with the CP function by using the S-NB. Preferably, the S-NB selected by the CP function is an NB having largest coverage in all NBs connected to the UE.

In this embodiment of the present invention, optionally, when in connected mode in the service range of the S-NB, the UE continuously sends an AS stratum heartbeat message to the M-NB, to prevent the inactive timer in the M-NB from expiring. When finding that the UE is in the idle state in service ranges of all S-NBs, the UE stops sending the AS stratum heartbeat message to the M-NB.

Alternatively, after entering the idle state in the service range of the M-NB, the UE selects an S-NB, and sends, to the CP function by using the S-NB, an update message carrying an identity change instruction, to change an identity of the S-NB to an M-NB. Preferably, the S-NB selected by the UE is an NB having largest coverage in all NBs connected to the UE.

It should be noted that, that the UE enters the idle state in the service range of the S-NB above means that the UE enters the idle state in the service ranges of all the NBs connected to the UE.

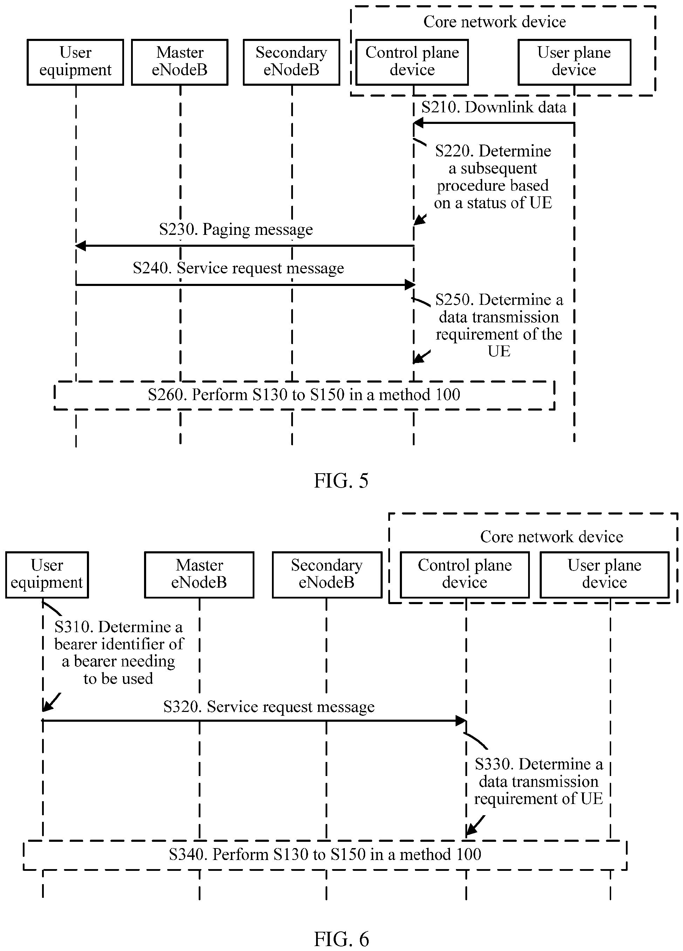

Further, UE in idle mode (where the UE is in the idle state in both service ranges of an M-NB and an S-NB) is triggered to enter a connected state when the UE is called or makes a call. Specifically, FIG. 5 shows a method 200 , not covered by the claims, for triggering UE to enter a connected state when the UE is called. As shown in FIG. 5, the method 200 includes the following steps.

S210: A UP Function receives downlink data, finds that there is no connection to an NB, and sends a downlink data notification (Downlink Data Notification) message to a CP function.

In S210, a destination Internet Protocol (Internet Protocol, "IP" for short) address of the downlink data that is received by the UP function and that is sent by a network is an IP address of UE.

S220: If UE is in idle mode, the CP function determines an M-NB of the UE based on stored context information of the UE, and performs S230 and S240; or if the UE is in connected mode in an M-NB, the CP function directly performs S250.

S230: The CP function sends a paging (paging) message to the UE by using the determined M-NB.

S240: The UE sends a service request (Service Request) message to the CP function by using the M-NB, to request to enter a connected state.

In S240, after the UE sends the service request message to the CP function, an SRB and a DRB between the M-NB and the UE may be recovered. Preferably, if the UE has no data on a bearer corresponding to the M-NB, only the SRB between the M-NB and the UE may be recovered, and the DRB between the M-NB and the UE may not be recovered.

S250: The CP function determines a data transmission requirement of the UE based on stored context information of the UE and an identifier of the UP function.

The context information of the UE stores a correspondence between a data transmission requirement of each bearer on the UE and an identifier of a UP function. The CP function may determine, based on the identifier of the UP function, a data transmission requirement corresponding to a bearer to be recovered.

S260: Perform S130 to S150 in the method 100.

Correspondingly, FIG. 6 shows a method 300 , not covered by the claims, for triggering UE to enter a connected state when the UE makes a call. As shown in FIG. 6, the method 300 includes the following steps.

S310: When to send data of particular QoS, UE in idle mode determines a bearer ID of a bearer to be used.

Optionally, the UE may determine, based on a pre-stored correspondence between QoS and an identifier of a bearer, the bearer ID corresponding to the particular QoS.

S320: The UE sends a service request message to a CP function, where the message includes the bearer ID.

S330: The CP function determines a data transmission requirement of the UE based on stored context information of the UE and the bearer ID.

S340: Perform S130 to S150 in the method 100.

It should be noted that the context information of the UE that is mentioned above includes information about a bearer on the UE, identification information of each bearer, QoS information corresponding to each bearer, security context information, and the like.

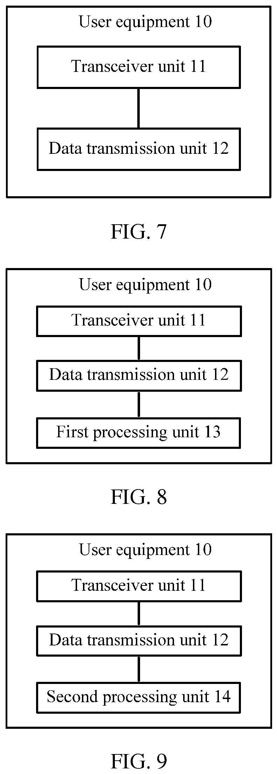

The data transmission method according to the embodiments of the present invention is described in detail above with reference to FIG. 2 to FIG. 6. User equipment according to an embodiment of the present invention is described in detail below with reference to FIG. 7 and FIG. 9. As shown in FIG. 7, user equipment 10 includes:
a transceiver unit 11, configured to receive a first message sent by a core network device by using a first base station, where the first message includes information related to a second base station; and
a data transmission unit 12, configured to: perform transmission of a non-access stratum NAS message with the core network device by using the first base station, and perform data transmission by using the second base station based on the information related to the second base station, where the NAS message is transmitted only by using the first base station.

Therefore, the NAS message between the user equipment according to this embodiment of the present invention and the core network device is transmitted by using only one base station, and the user equipment accesses, based on information that is sent by the core network device by using the base station and that is related to another base station, the another base station to perform data transmission. In this way, the user equipment can access different base stations to satisfy different data transmission requirements.

In this embodiment of the present invention, optionally, the information related to the second base station includes radio resource information. The radio resource information includes a radio resource used by the user equipment to access the second base station.

The data transmission unit 12 is specifically configured to: access the second base station by using the radio resource; establish, by using the second base station, a user plane connection used for data transmission; and perform data transmission by using the user plane connection.

In this embodiment of the present invention, optionally, before the transceiver unit 11 receives the first message sent by the core network device by using the first base station, the transceiver unit 11 is further configured to send information about a target cell to the core network device, so that the core network device determines the second base station based on the information about the target cell.

In this embodiment of the present invention, optionally, as shown in FIG. 8, the user equipment further includes a first processing unit 13.

Before the transceiver unit 11 sends the information about the target cell to the core network device, the transceiver unit 11 is further configured to receive first measurement configuration information and a data transmission requirement that are sent by the first base station.

The processing unit 13 is configured to measure, based on the first measurement configuration information, a cell supporting the data transmission requirement, to obtain the information about the target cell.

In this embodiment of the present invention, optionally, as shown in FIG. 9, the user equipment further includes a second processing unit 14.

The transceiver unit 11 is specifically configured to receive second measurement configuration information and a cell set supporting the data transmission requirement that are sent by the first base station.

The second processing unit 14 is specifically configured to measure a cell in the cell set based on the second measurement configuration information.

The transceiver unit 11 is specifically configured to send, to the first base station, a measurement result obtained by measuring the cell in the cell set, so that the first base station determines the target cell based on the measurement result and sends the information about the target cell to the core network device.

In this embodiment of the present invention, optionally, the information about the target cell includes a cell identifier of the target cell and/or a base station identifier of a base station to which the target cell belongs.

In this embodiment of the present invention, optionally, after the data transmission unit 12 performs data transmission by using the second base station, the transceiver unit 11 is further configured to continuously send an access stratum AS heartbeat message to the first base station, and stop sending the AS heartbeat message to the first base station if the user equipment is in idle mode in a service range of the second base station.

In this embodiment of the present invention, optionally, after the data transmission unit 12 performs data transmission by using the second base station, the transceiver unit 11 is further configured to send a second message to the core network device by using the second base station if the user equipment is in idle mode in a service range of the first base station and is in connected mode in a service range of the second base station. The second message is used to request to perform transmission of the NAS message with the core network device by using the second base station.

In this embodiment of the present invention, optionally, before the transceiver unit receives the first message sent by the core network device by using the first base station, the transceiver unit 11 is further configured to: send a third message to the core network device, where the third message is used to request to establish, on the user equipment, a user plane connection satisfying target quality of service QoS, so that the core network device determines the data transmission requirement based on the target QoS; or send, to the core network device, a fourth message used to request to enter a connected state, where the fourth message includes identification information of a bearer to be used when the user equipment performs data transmission, so that the core network device determines the data transmission requirement based on stored context information of the user equipment and the identification information of the bearer.

It should be understood that the user equipment 10 herein is presented in a form of functional units. The term "unit" herein may refer to an application-specific integrated circuit (Application-Specific Integrated Circuit, "ASIC" for short), an electronic circuit, a processor (for example, a shared processor, a dedicated processor, or a combination of shared or dedicated processors) configured to perform one or more software or firmware programs and a memory, an integrated logic circuit, and/or another appropriate component supporting the described functions. In an optional example, a person skilled in the art may understand that the user equipment 10 may be configured to perform each procedure and/or step in the methods 100 to 300 in the foregoing method embodiments. To avoid repetition, details are not described herein again.

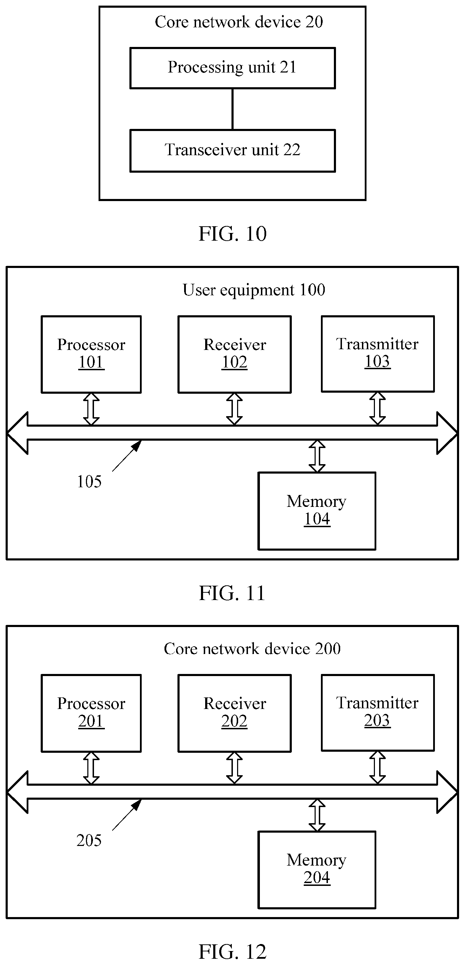

A core network device according to an embodiment of the present invention is described in detail below with reference to FIG. 10. As shown in FIG. 10, a core network device 20 includes:
a processing unit 21, configured to determine a data transmission requirement of user equipment UE, where
the processing unit 21 is further configured to determine a second base station based on the data transmission requirement; and
a transceiver unit 22, configured to send a first message to the UE by using the first base station, where the first message includes information related to the second base station, so that the UE performs transmission of a non-access stratum NAS message with the core network device by using the first base station and performs, by using the second base station based on the information related to the second base station, data transmission satisfying the data transmission requirement, where the NAS message is transmitted only by using the first base station.

Therefore, the core network device according to this embodiment of the present invention selects, based on the data transmission requirement of the user equipment, an appropriate base station for the user equipment to access a network to perform data transmission. In this way, the user equipment can satisfy different requirements on quality of service by using different radio access technologies.

In this embodiment of the present invention, optionally, the information related to the second base station includes radio resource information. The radio resource information includes a radio resource used by the UE to access the second base station.

Before the transceiver unit 22 sends the first message to the UE by using the first base station, the transceiver unit 22 is further configured to: send a second message to the second base station, where the second message is used to request the second base station to allocate, to the UE, the radio resource used by the UE to access the second base station; and receive the radio resource information sent by the second base station.

In this embodiment of the present invention, optionally, the transceiver unit 22 is further configured to: send the data transmission requirement to the UE by using the first base station, and receive information about a target cell that is sent by the UE. The information about the target cell is determined by the UE based on the data transmission requirement.

The processing unit 21 is specifically configured to determine the second base station based on the information about the target cell.

In this embodiment of the present invention, optionally, the transceiver unit 22 is specifically configured to send a third message to the first base station, where the third message includes indication information and the data transmission requirement, so that the first base station sends measurement configuration information and the data transmission requirement to the UE based on the indication information, and the UE determines the information about the target cell based on the measurement configuration information and the data transmission requirement.

In this embodiment of the present invention, optionally, the transceiver unit 22 is further configured to: send a fourth message to the first base station, where the fourth message includes the data transmission requirement, so that the first base station determines a cell set supporting the data transmission requirement; and receive the information about the target cell that is sent by the first base station, where the information about the target cell is obtained by the UE by measuring a cell in the cell set and is sent to the first base station. The processing unit 21 is specifically configured to determine the second base station based on the information about the target cell.

In this embodiment of the present invention, optionally, the information about the target cell includes a cell identifier of the target cell and/or a base station identifier of a base station to which the target cell belongs.

The processing unit 21 is specifically configured to determine the second base station based on the cell identifier and/or the base station identifier.

In this embodiment of the present invention, optionally, there are at least two target cells.

The processing unit 21 is specifically configured to: select a target cell from the at least two target cells based on at least two of the following information: signal strength information of each of the at least two target cells, load information of a base station to which each of the at least two target cells belongs, and a connection relationship between a base station to which each of the at least two target cells belongs and the first core network device; and determine the second base station based on information about the selected target cell.

In this embodiment of the present invention, optionally, the processing unit 21 is further configured to: deactivate an inactive timer in the first base station, so that the first base station does not release a signaling radio bearer SRB and a data radio bearer DRB between the first base station and the UE; and activate the inactive timer if determining that the UE enters an idle state in a service range of the second base station, so that the first base station releases the SRB and the DRB when the inactive timer expires.

In this embodiment of the present invention, optionally, the transceiver unit 22 is further configured to: send a fifth message to the first base station, where the fifth message is used to instruct the first base station to release only a data radio bearer DRB between the first base station and the UE when an inactive timer in the first base station expires; and send a sixth message to the first base station if the processing unit 21 determines that the UE enters an idle state in a service range of the second base station, where the sixth message is used to instruct the first base station to release a signaling radio bearer SRB between the first base station and the UE.

In this embodiment of the present invention, optionally, after the UE performs, by using the second base station, data transmission satisfying the data transmission requirement, the transceiver unit 22 is further configured to send a seventh message to the UE by using the second base station if the processing unit 21 determines that the UE enters an idle state in a service range of the first base station and is in connected mode in a service range of the second base station. The seventh message is used to instruct the UE to perform transmission of the NAS message with the core network device by using the second base station.

In this embodiment of the present invention, optionally, the transceiver unit 22 is further configured to receive an eighth message. The eighth message is used to request to establish, on the UE, a user plane connection satisfying target quality of service QoS. The processing unit 21 is specifically configured to determine the data transmission requirement based on the target QoS.

Alternatively, the transceiver unit 22 is further configured to receive a ninth message that is sent by the UE and that is used to request to enter the connected state. The ninth message includes identification information of a bearer to be used when the UE performs data transmission. The processing unit 21 is specifically configured to determine the data transmission requirement based on stored context information of the UE and the identification information of the bearer.

Alternatively, the transceiver unit 22 is further configured to receive a tenth message sent by a second core network device. The tenth message is used to notify the core network device that the second core network device receives downlink data whose destination Internet Protocol IP address is an IP address of the UE. The processing unit 21 is specifically configured to determine the data transmission requirement based on stored context information of the UE and identification information of the second core network device.

It should be understood that the core network device 20 herein is presented in a form of functional units. The term "unit" herein may refer to an application-specific integrated circuit (Application-Specific Integrated Circuit, "ASIC" for short), an electronic circuit, a processor (for example, a shared processor, a dedicated processor, or a combination of shared or dedicated processors) configured to perform one or more software or firmware programs and a memory, an integrated logic circuit, and/or another appropriate component supporting the described functions. In an optional example, a person skilled in the art may understand that the core network device 20 may be configured to perform each procedure and/or step in the methods 100 to 300 in the foregoing method embodiments. To avoid repetition, details are not described herein again.

As shown in FIG. 11, an embodiment of the present invention further provides user equipment 100. The user equipment 100 includes a processor 101, a receiver 102, a transmitter 103, and a memory 104. The processor 101, the memory 104, the receiver 102, and the transmitter 103 are connected by using a bus system 105. The memory 104 is configured to store an instruction. The processor 101 is configured to execute the instruction stored in the memory 104, to control the receiver 102 to receive a signal and control the transmitter 103 to send a signal.

The receiver 102 is configured to receive a first message sent by a core network device by using a first base station. The first message includes information related to a second base station. The processor 101 is configured to: perform transmission of a non-access stratum NAS message with the core network device by using the first base station, and perform data transmission by using the second base station based on the information related to the second base station. The NAS message is transmitted only by using the first base station

Therefore, the NAS message between the user equipment according to this embodiment of the present invention and the core network device is transmitted by using only one base station, and the user equipment accesses, based on information that is sent by the core network device by using the base station and that is related to another base station, the another base station to perform data transmission. In this way, the user equipment can access different base stations to satisfy different data transmission requirements.

It should be understood that in this embodiment of the present invention, the processor 101 may be a central processing unit (Central Processing Unit, "CPU" for short), or may be another general purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor, or the processor may be any conventional processor or the like.

The memory 104 may include a read-only memory and a random access memory, and provide an instruction and data to the processor 101. A part of the memory 104 may further include a non-volatile random access memory. For example, the memory 104 may further store information about a device type.

The bus system 105 may further include a power bus, a control bus, a status signal bus, and the like, in addition to a data bus. However, for clear description, various types of buses in the figure are marked as the bus system 105.

In an implementation process, steps in the foregoing methods can be implemented by using a hardware integrated logic circuit in the processor 101, or by using instructions in a form of software. The steps of the method disclosed with reference to the embodiments of the present invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, a register, or the like. The storage medium is located in the memory 104, and the processor 101 reads information in the memory 104 and completes the steps in the foregoing methods in combination with hardware of the processor 101. To avoid repetition, details are not described herein again.

Optionally, in an embodiment, the information related to the second base station includes radio resource information. The radio resource information includes a radio resource used by the user equipment to access the second base station.

The processor 101 is specifically configured to: access the second base station by using the radio resource; establish, by using the second base station, a user plane connection used for data transmission; and perform data transmission by using the user plane connection.

Optionally, in an embodiment, before the receiver 102 receives the first message sent by the core network device by using the first base station, the transmitter 103 is further configured to send information about a target cell to the core network device, so that the core network device determines the second base station based on the information about the target cell.

Optionally, in an embodiment, before the transmitter 103 sends the information about the target cell to the core network device, the receiver 102 is further configured to receive first measurement configuration information and a data transmission requirement that are sent by the first base station.

The processor 101 is configured to measure, based on the first measurement configuration information, a cell supporting the data transmission requirement, to obtain the information about the target cell.

Optionally, in an embodiment, the receiver 102 is specifically configured to receive second measurement configuration information and a cell set supporting the data transmission requirement that are sent by the first base station.

The processor 101 is specifically configured to measure a cell in the cell set based on the second measurement configuration information.

The transmitter 103 is specifically configured to send, to the first base station, a measurement result obtained by measuring the cell in the cell set, so that the first base station determines the target cell based on the measurement result and sends the information about the target cell to the core network device.

Optionally, in an embodiment, the information about the target cell includes a cell identifier of the target cell and/or a base station identifier of a base station to which the target cell belongs.

Optionally, in an embodiment, after the processor 101 performs data transmission by using the second base station, the transmitter 103 is further configured to continuously send an access stratum AS heartbeat message to the first base station, and stop sending the AS heartbeat message to the first base station if the user equipment is in idle mode in a service range of the second base station.

Optionally, in an embodiment, after the processor 101 performs data transmission by using the second base station, the transmitter 103 is further configured to send a second message to the core network device by using the second base station if the user equipment is in idle mode in a service range of the first base station and is in connected mode in a service range of the second base station. The second message is used to request to perform transmission of the NAS message with the core network device by using the second base station.

Optionally, in an embodiment, before the receiver 102 receives the first message sent by the core network device by using the first base station, the transmitter 103 is further configured to: send a third message to the core network device, where the third message is used to request to establish, on the user equipment, a user plane connection satisfying target quality of service QoS, so that the core network device determines the data transmission requirement based on the target QoS; or send, to the core network device, a fourth message used to request to enter a connected state, where the fourth message includes identification information of a bearer to be used when the user equipment performs data transmission, so that the core network device determines the data transmission requirement based on stored context information of the user equipment and the identification information of the bearer.

It should be understood that the user equipment 100 according to this embodiment of the present invention may correspond to the user equipment 10 in the embodiments of the present invention, and may correspond to the user equipment performing the methods 100 to 300 according to the embodiments of the present invention. In addition, the foregoing and another operation and/or function of each module in the user equipment 100 are respectively intended to implement a corresponding procedure corresponding to the user equipment in the methods shown in FIG. 2 to FIG. 6. For brevity, details are not described herein again.

Therefore, the NAS message between the user equipment according to this embodiment of the present invention and the core network device is transmitted by using only one base station, and the user equipment accesses, based on information that is sent by the core network device by using the base station and that is related to another base station, the another base station to perform data transmission. In this way, the user equipment can access different base stations to satisfy different data transmission requirements.

As shown in FIG. 12, an embodiment of the present invention further provides a core network device 200. The core network device 200 includes a processor 201, a receiver 202, a transmitter 203, and a memory 204. The processor 201, the memory 204, the receiver 202, and the transmitter 203 are connected by using a bus system 205. The memory 204 is configured to store an instruction. The processor 201 is configured to execute the instruction stored in the memory 204, to control the receiver 202 to receive a signal and control the transmitter 203 to send a signal.

The processor 201 is configured to determine a data transmission requirement of user equipment UE. The processor 201 is further configured to determine a second base station based on the data transmission requirement. The transmitter 203 is configured to send a first message to the UE by using the first base station, where the first message includes information related to the second base station, so that the UE performs transmission of a non-access stratum NAS message with the core network device by using the first base station and performs, by using the second base station based on the information related to the second base station, data transmission satisfying the data transmission requirement. The NAS message is transmitted only by using the first base station.

Therefore, the core network device according to this embodiment of the present invention selects, based on the data transmission requirement of the user equipment, an appropriate base station for the user equipment to access a network to perform data transmission. In this way, the user equipment can satisfy different requirements on quality of service by using different radio access technologies.

It should be understood that in this embodiment of the present invention, the processor 201 may be a central processing unit (Central Processing Unit, "CPU" for short), or may be another general purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor, or the processor may be any conventional processor or the like.

The memory 204 may include a read-only memory and a random access memory, and provide an instruction and data to the processor 201. A part of the memory 204 may further include a non-volatile random access memory. For example, the memory 204 may further store information about a device type.

The bus system 205 may further include a power bus, a control bus, a status signal bus, and the like, in addition to a data bus. However, for clear description, various types of buses in the figure are marked as the bus system 205.

In an implementation process, steps in the foregoing methods can be implemented by using a hardware integrated logic circuit in the processor 201, or by using instructions in a form of software. The steps of the method disclosed with reference to the embodiments of the present invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, a register, or the like. The storage medium is located in the memory 204, and the processor 201 reads information in the memory 204 and completes the steps in the foregoing methods in combination with hardware of the processor 201. To avoid repetition, details are not described herein again.

Optionally, in an embodiment, the information related to the second base station includes radio resource information. The radio resource information includes a radio resource used by the UE to access the second base station.

Before the transmitter 203 sends the first message to the UE by using the first base station, the transmitter 203 is further configured to: send a second message to the second base station, where the second message is used to request the second base station to allocate, to the UE, the radio resource used by the UE to access the second base station; and receive the radio resource information sent by the second base station.

Optionally, in an embodiment, the transmitter 203 is further configured to send the data transmission requirement to the UE by using the first base station. The receiver 202 is configured to receive information about a target cell that is sent by the UE. The information about the target cell is determined by the UE based on the data transmission requirement.

The processor 201 is specifically configured to determine the second base station based on the information about the target cell.

Optionally, in an embodiment, the transmitter 203 is specifically configured to send a third message to the first base station, where the third message includes indication information and the data transmission requirement, so that the first base station allocates measurement configuration information and the data transmission requirement to the UE based on the indication information, and the UE determines the information about the target cell based on the measurement configuration information and the data transmission requirement.

Optionally, in an embodiment, the transmitter 203 is further configured to: send a fourth message to the first base station, where the fourth message includes the data transmission requirement, so that the first base station determines a cell set supporting the data transmission requirement; and receive the information about the target cell that is sent by the first base station, where the information about the target cell is obtained by the UE by measuring a cell in the cell set and is sent to the first base station.

Optionally, in an embodiment, the information about the target cell includes a cell identifier of the target cell and/or a base station identifier of a base station to which the target cell belongs.

The processor 201 is specifically configured to determine the second base station based on the cell identifier and/or the base station identifier.

Optionally, in an embodiment, there are at least two target cells.

The processor 201 is specifically configured to: select a target cell from the at least two target cells based on at least two of the following information: signal strength information of each of the at least two target cells, load information of a base station to which each of the at least two target cells belongs, and a connection relationship between a base station to which each of the at least two target cells belongs and the first core network device; and determine the second base station based on information about the selected target cell.

Optionally, in an embodiment, the processor 201 is further configured to: deactivate an inactive timer in the first base station, so that the first base station does not release a signaling radio bearer SRB and a data radio bearer DRB between the first base station and the UE; and activate the inactive timer if determining that the UE enters an idle state in a service range of the second base station, so that the first base station releases the SRB and the DRB when the inactive timer expires.

Optionally, in an embodiment, the transmitter 203 is further configured to: send a fifth message to the first base station, where the fifth message is used to instruct the first base station to release only a data radio bearer DRB between the first base station and the UE when an inactive timer in the first base station expires; and send a sixth message to the first base station if the processor 101 determines that the UE enters an idle state in a service range of the second base station, where the sixth message is used to instruct the first base station to release a signaling radio bearer SRB between the first base station and the UE.

Optionally, in an embodiment, the transmitter 203 is further configured to send a seventh message to the UE by using the second base station if the processor 201 determines that the UE enters an idle state in a service range of the first base station and is in connected mode in a service range of the second base station. The seventh message is used to instruct the UE to perform transmission of the NAS message with the core network device by using the second base station.

Optionally, in an embodiment, the receiver 202 is further configured to receive an eighth message. The eighth message is used to request to establish, on the UE, a user plane connection satisfying target quality of service QoS. The processor 201 is specifically configured to determine the data transmission requirement based on the target QoS.

Alternatively, the receiver 202 is further configured to receive a ninth message that is sent by the UE and that is used to request to enter the connected state. The ninth message includes identification information of a bearer to be used when the UE performs data transmission. The processor 201 is specifically configured to determine the data transmission requirement based on stored context information of the UE and the identification information of the bearer.

Alternatively, the receiver 202 is further configured to receive a tenth message sent by a second core network device. The tenth message is used to notify the core network device that the second core network device receives downlink data whose destination Internet Protocol IP address is an IP address of the UE. The processor 201 is specifically configured to determine the data transmission requirement based on stored context information of the UE and identification information of the second core network device.

It may be understood that the core network device 200 according to this embodiment of the present invention may correspond to the core network device 20 in the embodiments of the present invention, and may correspond to the core network device performing the methods 100 to 300 in the embodiments of the present invention. In addition, the foregoing and another operation and/or function of each module in the core network device 200 are respectively intended to implement a corresponding procedure corresponding to the core network device in the methods in FIG. 2 to FIG. 6. For brevity, details are not described herein again.

Therefore, the core network device according to this embodiment of the present invention selects, based on the data transmission requirement of the user equipment, an appropriate base station for the user equipment to access a network to perform data transmission. In this way, the user equipment can satisfy different requirements on quality of service by using different radio access technologies.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Therefore, the protection scope of the present invention shall be subject to the protection scope of the claims.

## Claims

1. A data transmission method enabling a user equipment, UE, (10, 100) to access a plurality of radio access technologies, RATs, using one core network device having a control plane, CP, device and a user plane, UP, device in a communication system including the UE, a first base station, a second base station and said one core network device having said CP device and said UP device, comprising:
sending (S134) , by the user equipment UE, information about a target cell to the core network device, so that the core network device determines the second base station based on the information about the target cell ;
receiving (S140), by the user equipment UE, a first message sent by a core network device by using the first base station, wherein the first message comprises information related to the second base station; and
performing, by the UE, transmission of a non-access stratum, NAS, message with the core network device by using the first base station, and performing data transmission by using the second base station based on the information related to the second base station, wherein the NAS message is transmitted only by using the first base station, wherein the UE performs only data transmission using the second base station, wherein the first base station being a master eNodeB, M-NB, and the second base station being a secondary eNode, S-NB, belong to different radio access technologies; and wherein
**1**) the UE requests the core network device, using the master eNodeB, to establish a user plane by sending a target QoS to the CP device, based on which the CP device of the core network device determines (S 120) a data transmission requirement of the UE and selects an UP device supporting the target QoS and establishes, with the selected UP device, a bearer satisfying the target QoS;
**2**) in response, the CP device determines or selects a secondary eNodeB based on the data transmission requirement (S130), including the steps of
a) sending (S131), by CP device, instruction to the M-NB to allocate a measurement timeslot and the data transmission requirement;
b) sending (S132), by the M-NB, an allocated measurement timeslot and the data transmission requirement to the UE;
c) measuring (S133), by the UE, a cell satisfying the data transmission requirement by comparing the data transmission requirement sent (S132) by the M-NB and the data transmission requirement that is supported by each cell and that is learned from a System Information Block, SIB, message;
d) reporting (S134), by the UE, information about a target cell to the CP device based on a measurement result;
e) determining (S135), by the CP device, the S-NB based on the information about the target cell reported by the UE and sending (S135) a request message to the S-NB to allocate a radio resource for accessing the S-NB to UE, and
f) receiving (S136), by the CP device, a message from the S-NB that includes the radio resource;
**3**) after the CP device determines the secondary eNodeB, it sends (S140) to the UE, by using a NAS message, a first message that includes the radio resource sent by the S-NB and an S-NB instruction which is used to instruct the UE to access the S-NB;
**4**) the UE performs (S150) data transmission satisfying the data transmission requirement using the secondary eNodeB based on the first message by performing the following two steps:
the UE establishes (S151) a user plane connection to the S-NB based on the radio resource in a container; and
the CP device updates (S152) the UP function, to establish a connection between the S-NB and the UP function, and subsequently, the UE performs data transmission by using the S-NB.

2. The method according to claim 1, wherein information about a target cell includes the signal strength of the target cell, load status information of the target cell, and a cell identifier, a cell ID, of the target cell or a base station identifier of a secondary eNodeB to which the target cell belongs.

3. The method according to claim 1 or 2, wherein each of the first and second base stations supports data transmissions requiring data to be transmitted by using a 3G access network, a 4G access network, or a 5G access network.

4. The method according to claim 1, wherein for determining the S-NB, the CP performs the selection of one target cell from two or more target cells based on at least two of the following conditions:
i) signal strength of each of the two or more target cells, a load status of a NodeB to which each of the two or more target cells belong, wherein in this case, a set of target cells belonging to NodeBs whose load is less than a load threshold is first determined, then a target cell having highest signal strength is selected from the determined set of the target cells, and a NodeB to which the target cell belongs is determined as the S-NB; and/or
ii) connection status between a NodeB to which each of the two or more target cells belongs and the CP device, wherein in this case, a set of target cells belonging to NodeBs having an interface with the CP device is first determined, then a target cell having highest signal strength is selected from the determined set of the target cells, and a NodeB to which the target cell belongs is determined as the S-NB..

5. The method according to claim 1, wherein the sending, by the UE, information about a target cell to the core network device comprises:
receiving, by the UE, second measurement configuration information and a cell set supporting the data transmission requirement that are sent by the first base station;
measuring, by the UE, a cell in the cell set based on the second measurement configuration information; and
sending, by the UE to the first base station, a measurement result obtained by measuring the cell in the cell set, so that the first base station determines the target cell based on the measurement result and sends the information about the target cell to the core network device.

6. The method according to any one of claims 3 to 5, wherein the information about the target cell comprises a cell identifier of the target cell and/or a base station identifier of a base station to which the target cell belongs.

7. The method according to any one of claims 1 to 6, wherein after the performing, by the UE, data transmission by using the second base station, the method further comprises:
continuously sending, by the UE, an access stratum AS heartbeat message to the first base station; and
stopping, by the UE, sending the AS heartbeat message to the first base station if determining that the UE is in idle mode in a service range of the second base station.

8. The method according to any one of claims 1 to 6, wherein after the performing, by the UE, data transmission by using the second base station, the method further comprises:
sending, by the UE, a second message to the core network device by using the second base station if determining that the UE is in idle mode in a service range of the first base station and is in connected mode in a service range of the second base station, wherein the second message is used to request to perform transmission of the NAS message with the core network device by using the second base station.

9. The method according to claim 4, wherein before the receiving, by UE, a first message sent by a core network device by using a first base station, the method further comprises:
sending (S110), by the UE, a third message to the core network device, wherein the third message is used to request to establish, on the UE, a user plane connection satisfying target quality of service QoS, so that the core network device determines the data transmission requirement based on the target QoS; or
sending, by the UE to the core network device, a fourth message used to request to enter a connected state, wherein the fourth message comprises identification information of a bearer to be used when the UE performs data transmission, so that the core network device determines the data transmission requirement based on stored context information of the UE and the identification information of the bearer.

10. The method according to any one of claims 1 to 9, wherein the CP device sends to the M-NB a message carrying an inactive timer for deactivating the M-NB to prevent the M-NB from releasing a signalling radio bearer SRB and a data radio bearer DRB between the M-NB and the UE, wherein when connected within a service range of the S-NB, the UE continuously sends an AS stratum heartbeat message to the M-NB, to prevent the inactive timer in the M-NB from expiring, and when entering an idle state in the service range of the second base station, the UE stops sending the AS heartbeat message to the first base station such that when the inactive timer in the first base station expires, the UE enters the idle state in the service range of the first base station.

11. The method according to any one of claims 1-10 wherein further, after the UE enters the idle state in the service range of the M-NB, the UE selects an S-NB, and sends, to the CP device by using the S-NB, an update message carrying an identity change instruction, to change an identity of the S-NB to an M-NB, wherein preferably, the S-NB selected by the UE or CP device is an NB having largest coverage in all NBs connected to the UE.

12. A communication system including a first base station, a second base station and one core network device having a control plane, CP, device and a user plane, UP, device, and a user equipment (10, 100) capable of performing data transmission using a plurality of radio access technologies, RATs, using said one core network device, the UE, the CP device, the UP device and the one core network device being adapted to respectively carry out the steps mentioned in one or more of claims 1-11.

## Patentansprüche

1. Datenübertragungsverfahren, das es einer Benutzerausrüstung, UE, (10, 100) ermöglicht, auf eine Vielzahl von Funkzugriffstechnologien, RATS, zuzugreifen, unter Verwendung einer Kernnetzvorrichtung mit einer Steuerebenenvorrichtung, CP-Vorrichtung, und einer Benutzerebenenvorrichtung, UP-Vorrichtung, in einem Kommunikationssystem, einschließlich der UE, einer ersten Basisstation, einer zweiten Basisstation und der einen Kernnetzvorrichtung mit der CP-Vorrichtung und der UP-Vorrichtung, umfassend:
Senden (S 134), durch die Benutzerausrüstung, UE, von Informationen über eine Zielzelle an die Kernnetzvorrichtung, sodass die Kernnetzvorrichtung die zweite Basisstation basierend auf den Informationen über die Zielzelle bestimmt;
Empfangen (S140), durch die Benutzerausrüstung UE, einer durch eine Kernnetzvorrichtung durch Verwenden der ersten Basisstation gesendeten ersten Nachricht, wobei die erste Nachricht Informationen in Bezug auf die zweite Basisstation umfasst; und
Durchführen, durch die UE, einer Übertragung einer Nichtzugangsschichtnachricht, NAS-Nachricht, mit der Kemnetzvorrichtung durch Verwenden der ersten Basisstation und Durchführen einer Datenübertragung durch Verwenden der zweiten Basisstation basierend auf den Informationen in Bezug auf die zweite Basisstation,
wobei die NAS-Nachricht nur durch Verwenden der ersten Basisstation übertragen wird, wobei die UE nur eine Datenübertragung unter Verwendung der zweiten Basisstation durchführt,
wobei die erste Basisstation, die eine Master eNodeB, M-NB, ist und die zweite Basisstation, die eine sekundäre eNode, S-NB, ist, zu verschiedenen Funkzugriffstechnologien gehören und wobei
1) die UE von der Kernnetzvorrichtung, unter Verwendung der Master eNodeB, anfordert, eine Benutzerebene durch Senden einer Ziel-QoS an die CP-Vorrichtung einzurichten, basierend auf der die CP-Vorrichtung der Kernnetzvorrichtung eine Datenübertragungsanforderung der UE bestimmt (S120) und eine UP-Vorrichtung auswählt, die die Ziel-QoS unterstützt, und, mit der ausgewählten UP-Vorrichtung, einen Träger einrichtet, der die Ziel-QoS erfüllt;
2) als Reaktion darauf, die CP-Vorrichtung basierend auf der Datenübertragungsanforderung (S130) eine sekundäre eNodeB bestimmt oder auswählt, einschließlich der Schritte
a) Senden (S131), durch eine CP-Vorrichtung, einer Anweisung an die M-NB, einen Messzeitschlitz und die Datenübertragungsanforderung zuzuordnen;
b) Senden (S132), durch die M-NB, eines zugeordneten Messzeitschlitzes und der Datenübertragungsanforderung an die UE;
c) Messen (S133), durch die UE, einer Zelle, die die Datenübertragungsanforderung erfüllt, durch Vergleichen der durch die M-NB gesendeten (S132) Datenübertragungsanforderung und der Datenübertragungsanforderung, die durch jede Zelle unterstützt wird und die aus einer Systeminformationsblocknachricht, SIB-Nachricht, erfahren wird;
d) Berichten (S 134), durch die UE, von Informationen über eine Zielzelle an die CP-Vorrichtung basierend auf einem Messergebnis;
e) Bestimmen (S135), durch die CP-Vorrichtung, der S-NB basierend auf den durch die UE berichteten Informationen über die Zielzelle und Senden (S135) einer Anforderungsnachricht an die S-NB, eine Funkressource zum Zugreifen auf die S-NB zu einer UE zuzuordnen, und
f) Empfangen (S136), durch die CP-Vorrichtung, einer Nachricht von der S-NB, die die Funkressource einschließt;
3) die CP-Vorrichtung, nachdem sie die sekundäre eNodeB bestimmt, durch Verwenden einer NAS-Nachricht, eine erste Nachricht an die UE sendet (S140), die die durch die S-NB gesendete Funkressource und eine S-NB-Anweisung, die zum Anweisen der UE, auf die S-NB zuzugreifen, verwendet wird, einschließt;
4) die UE eine Datenübertragung, die die Datenübertragungsanforderung erfüllt, unter Verwendung der sekundären eNodeB basierend auf der ersten Nachricht durch Durchführen der folgenden zwei Schritte durchführt (S150):
die UE richtet (S151) eine Benutzerebenenverbindung zur S-NB basierend auf der Funkressource in einem Container ein und
die CP-Vorrichtung aktualisiert (S152) die UP-Funktion zum Einrichten einer Verbindung zwischen der S-NB und der UP-Funktion, und anschließend führt die UE eine Datenübertragung durch Verwenden der S-NB durch.

2. Verfahren nach Anspruch 1, wobei Informationen über eine Zielzelle die Signalstärke der Zielzelle, Laststatusinformationen der Zielzelle und einen Zellidentifikator, einen Zell-ID, der Zielzelle oder einen Basisstationsidentifikator einer sekundären eNodeB, zu der die Zielzelle gehört, einschließen.

3. Verfahren nach Anspruch 1 oder 2, wobei jede von der ersten und der zweiten Basisstation Datenübertragungen unterstützt, die ein Übertragen von Daten durch Verwenden eines 3G-Zugangsnetzwerks, eines 4G-Zugangsnetzwerks oder eines 5G-Zugangsnetzwerk erfordern.

4. Verfahren nach Anspruch 1, wobei die CP zum Bestimmen der S-NB die Auswahl einer Zielzelle aus zwei oder mehreren Zielzellen basierend auf zumindest zwei der folgenden Bedingungen durchführt:
i) einer Signalstärke von jeder der zwei oder mehreren Zielzellen, einem Laststatus einer NodeB, zu der jede der zwei oder mehreren Zielzellen gehören, wobei in diesem Fall ein Satz von Zielzellen, die zu NodeBs gehören, deren Last niedriger als eine Lastschwelle ist, zunächst bestimmt wird, dann eine Zielzelle, die die höchste Signalstärke aufweist, aus dem bestimmten Satz der Zielzellen ausgewählt wird, und eine NodeB, zu der die Zielzelle gehört, als die S-NB bestimmt wird; und/oder
ii) einem Verbindungsstatus zwischen einer NodeB, zu der jede der zwei oder mehreren Zielzellen gehört, und der CP-Vorrichtung, wobei in diesem Fall ein Satz von Zielzellen, die zu NodeBs gehören, die eine Schnittstelle mit der CP-Vorrichtung aufweisen, zunächst bestimmt wird, dann eine Zielzelle, die die höchste Signalstärke aufweist, aus dem bestimmten Satz der Zielzellen ausgewählt wird, und eine NodeB, zu der die Zielzelle gehört, als die S-NB bestimmt wird.

5. Verfahren nach Anspruch 1, wobei das Senden, durch die UE, von Informationen über eine Zielzelle an die Kernnetzvorrichtung umfasst:
Empfangen, durch die UE, von zweiten Messkonfigurationsinformationen und eines Zellensatzes, der die Datenübertragungsanforderung unterstützt, die durch die erste Basisstation gesendet werden;
Messen, durch die UE, einer Zelle im Zellensatz basierend auf den zweiten Mes skonfigurationsinformationen und
Senden, durch die UE an die erste Basisstation, eines durch Messen der Zelle im Zellensatz erhaltenen Messergebnisses, sodass die erste Basisstation die Zielzelle basierend auf dem Messergebnis bestimmt und die Informationen über die Zielzelle an die Kernnetzvorrichtung sendet.

6. Verfahren nach einem der Ansprüche 3 bis 5, wobei die Informationen über die Zielzelle einen Zellidentifikator der Zielzelle und/oder einen Basisstationsidentifikator einer Basisstation, zu der die Zielzelle gehört, umfassen.

7. Verfahren nach einem der Ansprüche 1 bis 6, wobei nach dem Durchführen, durch die UE, einer Datenübertragung durch Verwenden der zweiten Basisstation das Verfahren ferner umfasst:
fortlaufendes Senden, durch die UE, einer Zugangsschicht-"Heartbeat"-Nachricht, AS-"Heartbeat"-Nachricht, an die erste Basisstation und
Stoppen, durch die UE, des Sendens der AS-"Heartbeat"-Nachricht an die erste Basisstation, wenn bestimmt wird, dass die UE in einem Dienstbereich der zweiten Basisstation im Ruhemodus ist.

8. Verfahren nach einem der Ansprüche 1 bis 6, wobei nach dem Durchführen, durch die UE, einer Datenübertragung durch Verwenden der zweiten Basisstation das Verfahren ferner umfasst:
Senden, durch die UE, einer zweiten Nachricht an die Kernnetzvorrichtung durch Verwenden der zweiten Basisstation, wenn bestimmt wird, dass die UE in einem Dienstbereich der ersten Basisstation im Ruhemodus ist und in einem Dienstbereich der zweiten Basisstation in einem verbundenen Modus ist, wobei die zweite Nachricht zum Anfordern der Durchführung einer Übertragung der NAS-Nachricht mit der Kernnetzvorrichtung durch Verwenden der zweiten Basisstation verwendet wird.

9. Verfahren nach Anspruch 4, wobei vor dem Empfangen, durch eine UE, einer durch eine Kernnetzvorrichtung durch Verwenden einer ersten Basisstation gesendeten ersten Nachricht das Verfahren ferner umfasst:
Senden (S110), durch die UE, einer dritten Nachricht an die Kernnetzvorrichtung, wobei die dritte Nachricht zum Anfordern einer Einrichtung, auf der UE, einer Benutzerebenenverbindung, die eine Zieldienstgüte, Ziel-QoS, erfüllt, verwendet wird, sodass die Kernnetzvorrichtung die Datenübertragungsanforderung basierend auf der Ziel-QoS bestimmt; oder
Senden, durch die UE an die Kernnetzvorrichtung, einer vierten Nachricht, die zum Anfordern eines Eintretens in einen verbundenen Zustand verwendet wird, wobei die vierte Nachricht Identifikationsinformationen eines Trägers umfasst, die verwendet werden sollen, wenn die UE eine Datenübertragung durchführt, sodass die Kernnetzvorrichtung die Datenübertragungsanforderung basierend auf gespeicherten Kontextinformationen der UE und den Identifikationsinformationen des Trägers bestimmt.

10. Verfahren nach einem der Ansprüche 1 bis 9, wobei die CP-Vorrichtung eine Nachricht an die M-NB sendet, die einen inaktiven Timer zum Deaktivieren der M-NB zum Verhindern, dass die M-NB einen Signalisierungsfunkträger, SRB, und einen Datenfunkträger, DRB, zwischen der M-NB und der UE freigibt, enthält, wobei die UE, wenn in einem Dienstbereich der S-NB verbunden, fortlaufend eine AS-Schicht-"Heartbeat"-Nachricht an die M-NB sendet, um zu verhindern, dass der inaktive Timer in der M-NB abläuft, und die UE beim Eintreten in einen Ruhezustand im Dienstbereich der zweiten Basisstation das Senden der AS-"Heartbeat"-Nachricht an die erste Basisstation stoppt, sodass die UE, wenn der inaktive Timer in der ersten Basisstation abläuft, in den Ruhezustand im Dienstbereich der ersten Basisstation eintritt.

11. Verfahren nach einem der Ansprüche 1-10, wobei die UE ferner, nachdem die UE in den Ruhezustand im Dienstbereich der M-NB eintritt, einen S-NB auswählt und, durch Verwenden der S-NB, eine Aktualisierungsnachricht, die eine Identitätsänderungsanweisung enthält, an die CP-Vorrichtung sendet, um eine Identität der S-NB in eine M-NB zu ändern, wobei die durch die UE- oder CP-Vorrichtung ausgewählte S-NB vorzugsweise eine NB ist, die die größte Abdeckung in allen mit der UE verbundenen NBs aufweist.

12. Kommunikationssystem, einschließlich einer ersten Basisstation, einer zweiten Basisstation und einer Kernnetzvorrichtung mit einer Steuerebenenvorrichtung, CP-Vorrichtung, und einer Benutzerebenenvorrichtung, UP-Vorrichtung, und einer Benutzerausrüstung (10, 100), die in der Lage ist, eine Datenübertragung unter Verwendung einer Vielzahl von Funkzugriffstechnologien, RATs, unter Verwendung einer Kernnetzvorrichtung durchzuführen, wobei die UE, die CP-Vorrichtung, die UP-Vorrichtung und die eine Kernnetzvorrichtung angepasst sind, um jeweils die in einem oder mehreren der Ansprüche 1-11 angegebenen Schritte auszuführen.

## Revendications

1. Procédé de transmission de données permettant à un équipement d'utilisateur (UE) (10, 100) d'accéder à une pluralité de technologies d'accès radio (RAT) au moyen d'un dispositif de réseau central ayant un dispositif de plan de contrôle (CP) et un dispositif de plan d'utilisateur (UP) dans un système de communication incluant l'UE, une première station de base, une seconde station de base et ledit dispositif de réseau central ayant ledit dispositif CP et ledit dispositif UP, le procédé comprenant les étapes consistant à :
envoyer (S134), par l'équipement d'utilisateur (UE), une information concernant une cellule cible au dispositif de réseau central, de sorte que le dispositif de réseau central détermine la seconde station de base sur la base de l'information concernant la cellule cible ;
recevoir (S140), par l'équipement d'utilisateur (UE), un premier message envoyé par un dispositif de réseau central au moyen de la première station de base, le premier message comprenant une information relative à la seconde station de base ; et
réaliser, par l'UE, une transmission d'un message par strate sans accès (NAS) avec le dispositif de réseau central au moyen de la première station de base, et réaliser une transmission de données au moyen de la seconde station de base sur la base de l'information relative à la seconde station de base, le message NAS étant transmis uniquement au moyen de la première station de base, l'UE réalisant uniquement une transmission de données au moyen de la seconde station de base,
la première station de base étant un nœud B évolué maître (M-NB) et la seconde station de base un nœud B évolué secondaire (S-NB) appartenant à différentes technologies d'accès radio ; et dans lequel :
1) l'UE demande au dispositif de réseau central, au moyen du nœud B évolué maître, d'établir un plan d'utilisateur en envoyant une QoS cible au dispositif CP, sur la base de quoi le dispositif CP du dispositif de réseau central détermine (S 120) une exigence de transmission de données de l'UE et sélectionne un dispositif UP prenant en charge la QoS cible et établit, avec le dispositif UP sélectionné, une porteuse satisfaisant à la QoS cible ;
2) en réponse, le dispositif CP détermine ou sélectionne un nœud B évolué secondaire sur la base de l'exigence de transmission de données (S 130), ce qui inclut les étapes consistant à :
a) envoyer (S131), par un dispositif CP, une instruction au M-NB pour affecter un intervalle de mesure et l'exigence de transmission de données ;
b) envoyer (S132), par le M-NB, un intervalle de mesure affecté et l'exigence de transmission de données à l'UE ;
c) mesurer (S133), par l'UE, une cellule satisfaisant à l'exigence de transmission de données en comparant l'exigence de transmission de données envoyée (S 132) par le M-NB à l'exigence de transmission de données qui est prise en charge par chaque cellule et qui est apprise à partir d'un message de bloc d'information de système (SIB) ;
d) signaler (S 134), par l'UE, une information concernant une cellule cible au dispositif CP sur la base d'un résultat de mesure ;
e) déterminer (S135), par le dispositif CP, le S-NB sur la base de l'information concernant la cellule cible signalée par l'UE et envoyer (S 135) un message de demande au S-NB pour affecter à un UE une ressource radio pour accéder au S-NB, et
f) recevoir (S 136), par le dispositif CP, en provenance du S-NB, un message qui inclut la ressource radio ;
3) après que le dispositif CP a déterminé le nœud B évolué secondaire, il envoie (S140) à l'UE, au moyen d'un message NAS, un premier message qui inclut la ressource radio envoyée par le S-NB et une instruction de S-NB qui est utilisée pour donner l'instruction à l'UE d'accéder au S-NB ;
4) l'UE réalise (S150) une transmission de données satisfaisant à l'exigence de transmission de données au moyen du nœud B évolué secondaire sur la base du premier message en réalisant les deux étapes suivantes :
l'UE établit (S151) une connexion de plan d'utilisateur avec le S-NB sur la base de la ressource radio dans un contenant ; et
le dispositif CP met à jour (S 152) la fonction UP pour établir une connexion entre le S-NB et la fonction UP, puis l'UE réalise une transmission de données au moyen du S-NB.

2. Procédé selon la revendication 1, dans lequel l'information concernant une cellule cible inclut la puissance de signal de la cellule cible, une information de station de charge de la cellule cible et un identifiant de cellule (ID de cellule) de la cellule cible ou un identifiant de station de base d'un nœud B évolué secondaire auquel la cellule cible appartient.

3. Procédé selon la revendication 1 ou 2, dans lequel chacune des première et seconde stations de base prend en charge des transmissions de données exigeant que des données soient transmises au moyen d'un réseau d'accès 3G, d'un réseau d'accès 4G ou d'un réseau d'accès 5G.

4. Procédé selon la revendication 1, dans lequel, pour déterminer le S-NB, le CP réalise la sélection d'une cellule cible parmi deux cellules cibles ou plus sur la base d'au moins deux des conditions suivantes :
i) une puissance de signal de chacune des deux cellules cibles ou plus, un statut de charge d'un nœud B auquel chacune des deux cellules cibles ou plus appartient, auquel cas un ensemble de cellules cibles appartenant à des nœuds B dont la charge est inférieure à un seuil de charge est déterminé en premier, puis une cellule cible ayant une puissance de signal maximale est sélectionnée dans l'ensemble déterminé des cellules cibles, et un nœud B auquel la cellule cible appartient est déterminé comme étant le S-NB ; et/ou
ii) un statut de connexion entre un nœud B auquel chacune des deux cellules cibles ou plus appartient et le dispositif CP, auquel cas un ensemble de cellules cibles appartenant à des nœuds B ayant une interface avec le dispositif CP est déterminé en premier, puis une cellule cible ayant une puissance de signal maximale est sélectionnée dans l'ensemble déterminé des cellules cibles, et un nœud B auquel la cellule cible appartient est déterminé comme étant le S-NB.

5. Procédé selon la revendication 1, dans lequel l'envoi, par l'UE, d'une information concernant une cellule cible au dispositif de réseau central comprend les étapes consistant à :
recevoir, par l'UE, une seconde information de configuration de mesure et un ensemble de cellules prenant en charge l'exigence de transmission de données, qui sont envoyées par la première station de base ;
mesurer, par l'UE, une cellule dans l'ensemble de cellules sur la base de la seconde information de configuration de mesure ; et
envoyer, par l'UE à la première station de base, un résultat de mesure obtenu en mesurant la cellule dans l'ensemble de cellules, de sorte que la première station de base détermine la cellule cible sur la base du résultat de mesure et envoie l'information concernant la cellule cible au dispositif de réseau central.

6. Procédé selon l'une quelconque des revendications 3 à 5, dans lequel l'information concernant la cellule cible comprend un identifiant de cellule de la cellule cible et/ou un identifiant de station de base d'une station de base à laquelle la cellule cible appartient.

7. Procédé selon l'une quelconque des revendications 1 à 6, le procédé comprenant en outre, après la réalisation, par l'UE, d'une transmission de données au moyen de la seconde station de base, les étapes consistant à :
envoyer en continu, par l'UE, un message battement de cœur par strate d'accès (AS) à la première station de base ; et
arrêter, par l'UE, l'envoi du message battement de cœur AS à la première station de base s'il est déterminé que l'UE est dans un mode d'inactivité à portée utile de la seconde station de base.

8. Procédé selon l'une quelconque des revendications 1 à 6, le procédé comprenant en outre, après la réalisation, par l'UE, d'une transmission de données au moyen de la seconde station de base, l'étape consistant à :
envoyer, par l'UE, un deuxième message au dispositif de réseau central au moyen de la seconde station de base s'il est déterminé que l'UE est dans un mode d'inactivité à portée utile de la première station de base et dans un mode connecté à portée utile de la seconde station de base, le deuxième message étant utilisé pour demander de réaliser une transmission du message NAS avec le dispositif de réseau central au moyen de la seconde station de base.

9. Procédé selon la revendication 4, le procédé comprenant en outre, avant la réception, par l'UE d'un premier message envoyé par un dispositif de réseau central au moyen d'une première station de base, l'étape consistant à :
envoyer (S110), par l'UE, un troisième message au dispositif de réseau central, le troisième message étant utilisé pour demander d'établir, sur l'UE, une connexion de plan d'utilisateur satisfaisant à une qualité de service (QoS) cible, de sorte que le dispositif de réseau central détermine l'exigence de transmission de données sur la base de la QoS cible ; ou
envoyer, par l'UE au dispositif de réseau central, un quatrième message utilisé pour demander d'entrer dans un état connecté, le quatrième message comprenant une information d'identification d'une porteuse à utiliser quand l'UE réalise une transmission de données, de sorte que le dispositif de réseau central détermine l'exigence de transmission de données sur la base d'une information contextuelle stockée de l'UE et de l'information d'identification de la porteuse.

10. Procédé selon l'une quelconque des revendications 1 à 9, dans lequel le dispositif CP envoie au M-NB un message transportant un temporisateur inactif pour désactiver le M-NB pour empêcher le M-NB de libérer une porteuse radio de signalisation (SRB) et une porteuse radio de données (DRB) entre le M-NB et l'UE, et quand l'UE est connecté à portée utile du S-NB, l'UE envoyant en continu un message battement de cœur par strate d'accès (AS) au M-NB pour empêcher l'expiration du temporisateur inactif dans le M-NB, et quand l'UE entre dans un état d'inactivité à portée utile de la seconde station de base, l'UE arrêtant d'envoyer le message battement de cœur AS à la première station de base de sorte que, lorsque le temporisateur inactif dans la première station de base expire, l'UE entre dans l'état d'inactivité à portée utile de la première station de base.

11. Procédé selon l'une quelconque des revendications 1 à 10, dans lequel en outre, après l'entrée de l'UE dans l'état d'inactivité à portée utile du M-NB, l'UE sélectionne un S-NB et envoie, au dispositif CP au moyen du S-NB, un message de mise à jour transportant une instruction de changement d'identité pour changer une identité du S-NB pour un M-NB, de préférence le S-NB sélectionné par l'UE ou le dispositif CP étant un NB ayant une couverture maximale parmi tous les NB connectés à l'UE.

12. Système de communication incluant une première station de base, une seconde station de base et un dispositif de réseau central ayant un dispositif de plan de contrôle (CP) et un dispositif de plan d'utilisateur (UP), et un équipement d'utilisateur (10, 100) capable de réaliser une transmission de données au moyen d'une pluralité de technologies d'accès radio (RAT) au moyen dudit dispositif de réseau central, l'UE, le dispositif CP, le dispositif UP et le dispositif de réseau central étant conçus pour réaliser respectivement les étapes mentionnées dans une ou plusieurs des revendications 1 à 11.
